Europäisches Patentamt

(19) European Patent Office

Office européen des brevets

(11) Publication number: **0 269 197 B1**

## EUROPEAN PATENT SPECIFICATION

(12)

(45) Date of publication of patent specification: **29.04.92**  (51) Int. Cl.⁵: **B29C  67/14**

(21) Application number: **87305205.4**

(22) Date of filing: **12.06.87**

(54) **Method and means for making pultruded fibre reinforced articles.**

(30) Priority: **26.11.86 US 935403**

(43) Date of publication of application:
**01.06.88 Bulletin  88/22**

(45) Publication of the grant of the patent:
**29.04.92 Bulletin  92/18**

(84) Designated Contracting States:
**AT BE CH DE ES FR GB GR IT LI LU NL SE**

(56) References cited:
**EP-A- 0 131 484        EP-A- 0 158 118**
**EP-A- 0 206 134        FR-A- 1 539 577**
**GB-A- 1 373 782        US-A- 2 682 292**
**US-A- 3 003 189        US-A- 3 716 431**
**US-A- 3 895 896        US-A- 3 960 629**
**US-A- 4 207 129        US-A- 4 445 957**
**US-A- 4 681 722**

**PATENT ABSTRACTS OF JAPAN, vol. 10, no.
77 (M464)(2134), March 26, 1986 & JP-A-60
220 715 (KOGYO GIJUTSUIN) 05-11-1985**

(73) Proprietor: **INDUSTRIAL TECHNOLOGY RE-
SEARCH INSTITUTE
1021 Kuang Fu Road
Hsinchu(TW)**

(72) Inventor: **Tong, Shen-Nan
No.9 Lane 182 Lin Sheng Road
Hsin-chu(TW)**

(74) Representative: **Geldard, David Guthrie et al
UROUHART-DYKES AND LORD Tower House
Merrion Way
Leeds West Yorkshire LS2 8PA(GB)**

## Description

Background of the Invention

This invention relates to a new process and apparatus for producing generally elongated composite articles of fibre-reinforced resins.

More specifically, this invention provides a novel process for continuously producing composite articles of cylindrical shape or other elongated shapes of fiber-reinforced thermosetting resins, which process, unlike the known processes, makes possible the high-speed, high-quality, economical, production of such articles.

As a continuous process for producing composite articles of fibre-reinforced thermosetting resins, a so called pultrusion process has heretofore been proposed. In such a pultrusion process a fibre-reinforcing material in roving or mat state, or a combination thereof, is impregnated with the thermosetting resin, and the resulting composite is introduced into a heated die for shaping and setting, i.e. curing. The die typically has a passage defining the cross-section or shape of the ultimate product.

Accordingly, the conventional pultrusion processes involve drawing a bundle of filaments from a source thereof; wetting these filaments or reinforced fibres and impregnating them with a preferably thermosettable polymer resin by passing the filaments through a resin bath in an open tank; pulling the resin-wetted and impregnated bundle through a shaping die to align the fibre bundles and to manipulate it to the proper cross-sectional configuration and curing the resin in a mould while maintaining tension on the filaments. Since the fibres progress completely through the pultrusion process without being cut or chopped, the resulting products have exceptionally high longitudinal strength. They are, therefore, uniquely suited for articles in which high longitudinal strength is required.

The use, in the prior art, of open resin tanks for impregnating the fibres or rovings continuously passing therethrough has the following grave disadvantage:

I. In an open tank impregnator, there is the danger that the monomer or highly evaporative content in the resin compound will cause air pollution which, in turn, endangers the health and welfare of the workmen in the plant and can increase the danger of fires, etc.

2. The viscosity of the resin compound in the open resin tank changes with time due to monomer evaporation. This results in an uneven composition of the resin in the tank which, in turn, leads to unstable product quality and consequently a high rate of waste.

3. Mixing of the resin in the open tank with a hardener not only shortens the "shelf life" of the composition but also will cause gelling in the open impregnator tank. The residue which results must be frequently cleaned at substantial labour cost and downtime of the tank.

4. As a result of one or more of the foregoing disadvantages it will be seen that the proportion of resin to fibre will not be consistent due to the great difficulty in controlling the viscosity and the composition of the resin mixture in the open impregnation tank.

5. After leaving the open impregnation tank, the array of the fibres is often disordered, and the fibres are often twisted and damaged and their appearanc is generally poor.

6. Products produced by conventional pultrusion techniques must frequently be reinforced by use of expensive filament material or fabric because of the poor tranverse directional performance characteristics.

7. The open tank impregnation method is not suitable for thermoplastic resins, particularly engineering plastic resins with a relatively high melting point.

In order to overcome the above-mentioned shortcomings, a great deal of attention has recently been given to improving the reinforcing materials, resins and hardening agents. For example, in reinforcing materials, quick wetting glass fibres and three dimensional cross-linking reinforcing materials are now available in the marketplace. As to the hardeners, efforts have been made to accelerate hardening time and prolong shelf life. Resins now in use have all of the advantages of low shrinkage, fire retardant quality, high temperature resistance, reduction of exotherm cracking and low volatility. Production facilities have been improved so that products of larger size can be produced, particularly by increasing the pull-force.

As far as the pultrusion technology is concerned, a number of new processes have been developed including systems for permitting a rapid exchange of resin tanks, means for more uniformly heating the mould, systems for controlling more accurately the tension of reinforced fibres, and micro-computer process controls for many of the steps in the process. Unfortunately all of the foregoing can only solve a portion of the the existing problems. The problems created by the use of the open resin impregnating tank have not been solved.

The state of the art in continuous pultrusion processes is generally described in US-A-4,394,338 and US-A-4,445,957. Each of the foregoing patents relates to a continuous pultrusion process in which fibre reinforcing material is impregnated with a thermosetting resin in an open resin impregnator tank. This traditional pultrusion technology has the shortcomings mentioned above.

In each of the aforesaid patents the filaments are impregnated with a thermosetting polymer resin by being pulled though an open vessel filled with such resin. Then, the resin-impregnated bundle of filaments is pulled through a shaping die to align the filament bundles and to manipulate them into the proper cross-sectional configuration whereafter the composite is cured in a mould.

US-A-3960629 overcomes certain of the aforesaid disadvantages and discloses a pultrusion process which comprises the steps of conveying resin and hardener through separate conduits at given respective rates and continuously mixing to form a mixture of resin and hardener in a given proportion: continuously conveying the mixture without contact with ambient air, to a forming die; continuously feeding a plurality of reinforcing fibres into an upstream portion of the forming die; continuously impregnating the fibres with the mixture in the forming die; and continuously shaping the impregnated fibres within a finishing die into a shape having the cross-sectional shape of the finished composite article while pulling the fibres lengthwise through the dies, and is takens a the starting point for claim 1. In this prior art reference, however, there is still exposure of the resin mixture to atmosphere.

The invention seeks to improve the pultrusion process and according to a first aspect of the invention the materials pass directly from the forming die into the finishing die within a common casing; the fibres are fed into the upstream portion of the forming die in an array corresponding in shape generally to the transverse cross-sectional outline of the final product to be formed, and the mixture is continuously injected into the upstream end of the forming die generally axially thereof so as to maintain the fibres arrayed about the axis of the forming die in a shape corresponding to the cross-sectional outline of the final product.

Preferably the resin and the hardener are continuously conveyed to a mixer, and the mixture is continuously conveyed from the mixer to the upstream end of the forming die.

Desirably individual filaments are fed into individual ones, respectively, of a group of openings in an upstream axial end plate of the forming die, said group forming about the axis of the forming die an array of openings resembling generally the outline of the transverse cross-section of the article to be produced. The resin mixture is preferably axially injected into the forming die substantially centrally of the group of filaments entering the forming die.

The invention also extends to a pultrusion apparatus and to die means for a pultrusion process, as defined in the claims.

Brief Description of the Drawings

Embodiments in accordance with the present invention will now be described, by way of example only, with reference to the accompanying drawings in which:

Fig. 1 is a diagrammatic perspective view showing an apparatus for the practice of one example of the process of this invention;

Fig. 2 is a side view, in longitudinal section, of the essential parts of the die according to this invention;

Fig. 3 is a diagrammatic front elevational view of the die according to a preferred embodiment of this invention.

Fig. 4 is a diagrammatic front elevation of this invention for making a elongated article having a rectangular transverse cross-sectional shape;

Fig. 5 is a diagrammatic front elevational view showing still another preferred embodiment of a die according to this invention for making an elongated article having an L-shaped transverse cross-section;

Fig. 6 is a diagrammatic side elevational view of an apparatus for practice of another example of the process of the invention;

Fig. 7 is a transverse cross-sectional view taken along arrows 7-7 of Fig. 6 showing a plurality of injection nozzles distributed around the body of the die.

Fig. 8 is a front elevational view of the distribution plate of the die shown in Fig. 6; and

Fig. 9 is a diagrammatic side elevational view of a die according to another preferred embodiment of the invention.

Detailed Description of the Invention

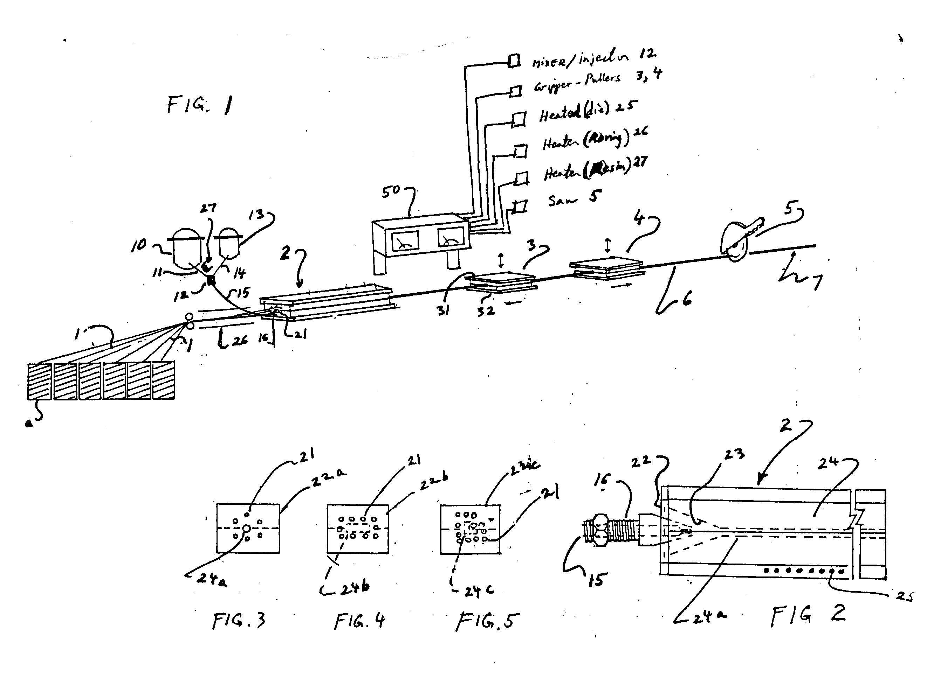

Referring first to Fig. I, continuous length reinforcing fibres rovings or filaments I, are conducted from a plurality of spools Ia into a heated die 2. The fibres I pass through orifices 2I (Fig. 3) in a guide/distribution plate 22 which forms the upstream axial end of the die 2. Upon entering the die 2, through the orifices 2I, the filaments pass through shaping chamber 23 and then, in lengthwise direction, through the cavity 24a in mould portion 24, toward the downstream end of the die.

The reinforcing filaments I are pulled from the downstream end of die 2 by a pair of reciprocating gripper-pullers 3 and 4, each of which sequentially opens to let filament pass through (as a result of pulling by the other gripper-puller), moves a predetermined distance in a direction toward the die, with the jaws 3l, 32 open, closes to grasp the filament between the jaws 3l and 32 thereof and then moves the same distance in a direction away from the die 2 (with the jaws closed) to pull the finished composite product 6 out of the die. As a result of several reciprocating gripper-pullers operating in sequence a substantially continuous drawing of the filaments l through the die 2 may be accomplished.

Downstream of the gripper-pullers 3, 4 is a cutting station including an automatic saw 5 for sequentially cutting predetermined lengths 7 from the strip of product 6 withdrawn from the die 2.

A resin, preferably a thermosetting resin such as unsaturated polyester resin, epoxy resin or polyamide resin, stored in a closed vessel l0 is conveyed through a closed conduit ll to a mixer unit l2 where it is mixed with catalyst (and/or filler) preferably stored in a closed vessel l3 and conveyed to the mixer l2 through a conduit l4. After being mixed in the appropriate proportions, the mixture of resin and catalyst is fed through a conduit l5 to an injector nozzle l6. Injector nozzle l6 extends through the distributor/guide plate 22 into the interior of shaping chamber 23 of die 2 (see Fig. 2).

According to the preferred process of the invention, the rovings or filaments l for reinforcement may be continuous roving, tape, or fabric, of fiberglass, carbon fibre, kevlar or a hybrid of these, and are conducted through the orifices 2l into the shaping chamber 23 where they are impregnated by the resin/catalyst mixture injected by injector l6. The reinforcing fibre material, thus impregnated, is simultaneously shaped, as it passes through shaping chamber 23, to substantially the transverse cross-sectional shape of the desired finished product.

As seen in Figs. l and 2, injection nozzle l6 is preferably centrally located with respect to the distributor plate 22 and the tip of the injector nozzle l6 extends into the shaping chamber 23 so that the injected resin material will be injected into direct contact with the filaments l entering shaping chamber 23 through the respective orifices 2l. As best seen in Figs. 3, 4 and 5, the transverse outline configuration of the cavity of mould 24 can be varied depending on the outline configuration desired for the ultimate product. Thus, for example, if a rod shaped, i.e. solid cylindrical pultruded product is desired, the mould cavity shape 24a, indicated in Fig. 3, is generally circular in shape, with the orifices 2l distributed along a circle coaxial with the cylindrical mould cavity. Fig. 4 shows the configuration of the array of orifices 2l for use with a mould cavity configuration 24b for producing an elongated pultruded article having a transverse cross-sectional configuration which is substantially rectangular in shape.

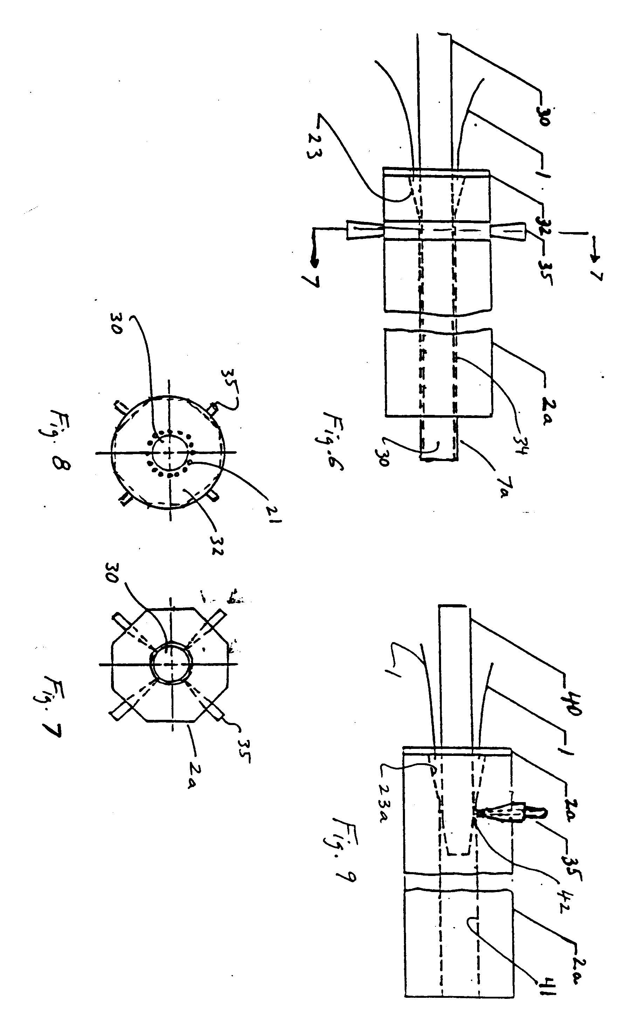

Fig. 5, on the other hand, illustrates a preferred array for the orifices 2l in the case of a mould cavity for forming an L-shaped cross-sectional pultruded article.

The mould portion 24 of the die 2 is preferably heated so that the resin mixture/roving composite will set while it is passing therethrough. This may be accomplished by heating element 25 embedded in the mould portion 24.

Reinforcing fibres or rovings l from the spools la are preferably preheated by passing heater 26 before entering the die 2 through a predetermined array of openings 2l.

The resin and the catalyst or hardener are fed into the mixer l2 at a fixed predetermined ratio. The resin/catalyst mixture is then fed directly to the front section of the die 2 through injector l6 which discharges the required amount of mixed resin at the identical rate at which the mixing takes place. Upon being discharged into the upstream shaping cavity 23 of the die the resin/hardener mixture immediately impregnates the fibres l which are being drawn through the die 2 at a given predetermined speed by the reciprocating gripper/pullers 3 and 4, or by any similar pulling device, for example a pair of opposed endless belts.

It will be seen that according to this process the resin is not exposed to the atmosphere. It is stored in a closed resin supply vessel l0, conveyed through a closed conduit ll to the mixer l2 and then fed through the conduit l5 directly to the injector l6 and thence into the interior of impregnating/shaping cavity 23 where it immediately impregnates the fibres or filaments l. Accordingly, the process is free from such disadvantageous results as monomer evaporation, change of viscosity or uneven composition of materials. Furthermore, since the resin mixture is pumped into the impregnating chamber 23 at the rate required for impregnating the fibres l feeding through that chamber and is being mixed with catalyst at the same rate in the mixer, there will not be any unused resin capable of mixing with catalyst which can result in forming residue. According to this process, therefore, the resin/catalyst mixture and the fibres are each fed in the required ratio and impregnated entirely within the confines of the die 2 to allow uniformity, stability and homogeneous composition. The distributor plate 22, with the orifices 2l therethrough arranged in the preferred array for the article to be produced, forces the fibres to array as required for maximum quality and appearance of the final pultruded product 7.

Since the resin and the catalyst are fed into the mixer l2 through separate conduits ll and l4 respectively, the resin in conduit ll may be preheated by a heater 27, to reduce its viscosity and thereby to speed the impregnation process and consequently the productivity output, without affecting the shelf time of the remaining quantities of resin.

Preheating of the fibres I before they are fed into the die 2 may be accomplished by a heater 26 and results not only in reducing the time required for impregnating the fibres with the resin mixture, but will also decrease the water content of the fibres, resulting in improved quality of the final product. The disadvantageous results of non-homogeneous quality of low production speed in the prior art processes is therefore overcome.

The process according to the present invention is useful also with thermoplastic resins. Since the resin injector is positioned to discharge material inside the die, melted theremoplastic resin may be extruded directly through the injector into the interior of the die. This contrasts with the traditional process where expensive powdered plastic pellets are required to avoid solidification before the thermoplastic resin is introduced into the die. In addition to the benefit of energy saving, low production costs and ease of processing, the products may be varied by adding resin through additional openings in the body of the die. Thus, according to the process and apparatus illustrated in Figs. 6, 7, 8 and 9, the composition of the resin forming the core of the finished product may be the same or different from the composition of the resin forming an outer cover of the finished product, in the event a product having a core and a different outer cover should be desired. Thus, sandwich-type or layered products may be produced. Also, if the process according to the present invention is combined, as shown for example in Figs. 6, 7 and 8, with a conventional process of extrusion, the extruded product 30 from the extrusion machine may be introduced directly into a central opening in distribution plate 32 of the die 2a of the pultrusion machine as seen in Fig. 6 in place of where the opening in injection nozzle l6 would otherwise be located. The resin mixture for forming, together with the fibre I, an outer layer around core 30 is introduced into the die 2 through a plurality of injection nozzles 25. This permits the manufacture of the pultruded product 7a with an extruded central core 30. The central core may be square, round or other shape and may be hollow or solid to permit a variety of designs and structures.

If a central core member such as core part 40 illustrated in Fig. 9 is made a part of the die 2a and extends into the die 2a as shown in Fig. 9, a continuous tube or sleeve-shaped hollow pultruded product may be formed including such as are reinforced in different directions, as described below. The sleeve may contain different kings of fibres or its hybrids. The shaping orifice in this case would preferably be of annular shape (if a round tubular product were desired) and would be formed between the periphery of the central core 40 and the wall of the mould cavity 4l. The fibres are arrayed to pass through this annular opening 42 and preferably a plurality of resin injectors 35 are distributed around the periphery of the die 2a as seen, for example, in Fig. 9. The shaping and resin impregnation of the fibres takes place in this annular chamber 42 and the composite tube-shaped product (not shown) then passes through the heated mould portion 4l of the die 2a for hardening.

According to the embodiment illustrated in Fig. 6 the resin and hardener mixture is fed to and immediately extruded into the die by injectors 35 distributed around the upstream portion of the die 2a. Reinforcing fibres I are guided into the die through the holes on the distributor plate. If, instead of a rod 30 of extruded plastic material, a rigid hollow tube (not shown) of knitted fibre is fed into the die through the central opening in the distributor plate the fibres I will form around the hollow tube in the cavity and will be wetted and impregnated by the resin mixture extruded from injectors 35. Upon passing through the heated mould portion 34, multidirectionally reinforced pultruded product is formed and is cut to required length by shearing equipment.

The various operating steps of the process are accurately controlled by control means 50 well-known to those skilled in the art, which may be readily adapted for the purpose. The control means 50 controls the operation of the mixer l2 (including the speed of the mixer as well as the proportions of resin and catalyst which are mixed), determining also the rate and volume of the resin mixture injected by injector nozzle l6, the temperature at which the various heaters, namely heater 25, heater 26 and heater 27 operate, the operation of the reciprocating gripper/pullers 3 and 4 (to control the rate at which composite product 6 is withdrawn from the die 2) and thus the rate at which the fibres I are drawn through the die 2, and the intervals at which the shearing apparatus 5 cuts the composite 6 into individual articles 7.

## Claims

1. A pultrusion process for producing composite articles, which comprises the steps of conveying resin and hardener through separate conduits at given respective rates and continuously mixing to form a mixture of resin and hardener in a given proportion; continuously conveying the mixture without contact with ambient air, to a forming die (23); continuously feeding a plurality of reinforcing fibres into an upstream portion of the forming die; continuously impregnating the fibres with the mixture in the forming die; and continuously shaping the impregnated fibres within a finishing die (24a) into a shape having the cross-sectional shape of the finished composite article while pulling the fibres lengthwise through the dies; characterised in that the materials pass directly from the forming die into the finishing die within a common casing (2); the fibres are fed into the upstream portion of the forming die in an array corresponding in shape generally to the transverse cross-sectional outline of the final product to be formed, and the mixture is continuously injected into the upstream end of the forming die generally axially thereof so as to maintain the fibres arrayed about the axis of the forming die in a shape corresponding to the cross-sectional outline of the final product.

2. A pultrusion process according to claim 1, characterised in that the resin and the hardener are continuously conveyed to a mixer (12), and the mixture is continuously conveyed from the mixer to the upstream end of the forming die.

3. A pultrusion process according to claim 1 or claim 2 characterised in that individual filaments are fed into individual ones, respectively, of a group of openings (21) in an upstream axial end plate (22) of the forming die, said group forming about the axis of the forming die an array of openings resembling generally the outline of the transverse cross-section of the article to be produced.

4. A pultrusion process according to any one of the preceding claims in which the resin mixture is axially injected into the forming die (23) substantially centrally of the group of filaments entering the forming die.

5. A pultrusion process according to any one of the preceding claims characterised in that the fibres are drawn through the dies in generally axial direction.

6. A pultrusion apparatus for producing elongated composite articles, comprising mixing means (12) for continuously mixing resin and hardener to form a mixture containing resin and hardener in predetermined proportion; filament supply means (1a) for providing a continuous supply of a plurality of filaments; die means (2) for receiving continuous quantities of the mixture and for continuously impregnating the filaments with such mixture and for shaping the impregnating filaments and mixture into a continuous strip having a cross-sectional outline shape corresponding to the cross-sectional outline of the finished article; conduit means (15) connecting said mixing means with said die means for conveying said mixture to said die means and for maintaining said mixture out of contact with the surrounding atmosphere between said mixing means and said die means; and pulling means (3,4) downstream of said die means for pulling the shaped continuous strip material out of said die means; characterised in that said die means comprises a forming die (23) followed by a finishing die (24a), both axially aligned within a common casing (2), and said die means includes a distributor plate (22) at the upstream axial end of the forming die, said distributor plate including a plurality of orifices, at least one of which (24a) is for the introduction of the mixture generally axially into said forming die and the remaining ones of which (21) are for the introduction of the filaments into said forming die in an array about the axis of the forming die, said array having a shape corresponding to the cross-sectional outline of the final product.

7. A pultrusion apparatus according to claim 6, characterised in that said conduit means (15) comprises injector means (16) co-operating with said one orifice (24a) for injecting the mixture into the interior of said forming die without the mixture contacting the surrounding atmosphere.

8. A pultrusion apparatus according to claim 7 characterised in that said distributor plate (22) has said orifices arranged thereon such that said injector means (16) is generally centrally positioned thereon and said remaining orifices (21) form an array of orifices around said injector means.

9. A pultrusion apparatus according to any one of claims 6 to 8, chacterised by heating means (26) for preheating the filament prior to their entering said die means.

10. A pultrusion apparatus according to any one of claims 6 to 9 characterised by heating means (27) for preheating the resin prior to its entering said mixing means and conduit means (11) connected to a source of resin (10) and to said mixing means (12) for conveying the resin to said mixing means without the resin contacting the surrounding air.

11. Die means for a pultrusion process, comprising a materials input means (22) for arranging the relative positioning of filaments and of a resin mixture entering said die means, and space within the die means wherein the filaments are impregnated with the resin mixture and the resulting composite is shaped, characterised in that said die means comprises a forming die (23) followed by a finishing die (24a), both axially aligned within a common casing (2), said finishing die includes a heated mould portion (25) for setting the composite, and said input means includes injector means (16) for injecting the resin mixture generally axially into the upstream end of said forming die and means (21) for guiding the filaments into the forming die in an array about the axis of the forming die, said array having a shape corresponding to the cross-sectional outline of the shape delivered from the finishing die.

12. Die means according to claim 11 characterised in that the materials input means comprises an upstream end plate (22) for said forming die, said filament guiding means is a plurality of orifices (21) arranged in said array in said end plate; and a central opening (24a) is provided in said end plate for receiving a core of material.

13. Die means according to claim 11 and further comprising a mould core member (40) extending axially through said forming die and defining therewith an annular space through which the resin filament composite may be extruded to form a hollow core composite product.

**Revendications**

1. Procédé pour la production d'articles composites par pultrusion comportant les étapes d'acheminement de la résine et de durcisseur à travers des conduits séparés à des débits donnés respectifs et leurs mélanges continus pour former un mélange de résine et de durcisseur dans une proportion donné; l'acheminement en continu du mélange sans contact avec l'air ambiant jusqu'à une filière de formage (23): l'alimentation en continu d'une pluralité de fibres d'armature dans un tronçon amont de la filière de formage; l'imprégnation continue des fibres depuis le mélange dans la filière de formage; la mise en forme continue des fibres imprégnées à l'intérieur d'une filière de finition (24a) selon une configuration ayant la forme en coupe de l'article composite fini, tout en exerçant une traction longitudinale sur les fibres à travers les filières; caractérisé en ce que les matières passent directement de la filière de formage dans la filière de finition à l'intérieur d'un carter commun (2); les fibres sont alimentées dans le tronçon amont de la filière de formage selon une disposition correspondant à la configuration générale du profil en coupe transversale du produit final à réaliser, et le mélange est injecté en continu à l'extrémité amont de la filière de formage selon l'axe général de cette dernière, de façon à maintenir les fibres disposées autour de l'axe de la filière de formage selon une configuration correspondant au profil en coupe du produit final.

2. Procédé de pultrusion selon la revendication 1, caractérisé en ce que la résine et le durcisseur sont acheminés en continu à un mélangeur (12) et le mélange est acheminé en continu depuis le mélangeur à l'extrémité amont de la filière de formage.

3. Procédé de pultrusion selon la revendication 1 ou la revendication 2, caractérisé en ce que les filaments individuels sont alimentés dans les ouvertures individuelles respectivement, d'un groupe d'ouvertures (21) disposées sur une plaque (22) à l'extrémité axiale amont de la filière de formage, ledit groupe formant autour de l'axe de la filière de formage, une disposition d'ouvertures ressemblant généralement au profil de la coupe transversale de l'article à fabriquer.

4. Procédé de pultrusion selon l'une quelconque des revendications qui précèdent, dans lequel le mélange de résine est injecté axialement dans la filière de formage (23) sensiblement au centre du groupe de filaments pénétrant dans la filière de formage.

5. Procédé de pultrusion selon l'une quelconque des revendications qui précèdent, caractérisé en ce que les fibres sont tirées à travers les filières selon une direction générale axiale.

6. Appareil de pultrusion pour la production d'articles composites de forme élongée, l'appareil comportant des moyens de mélange (12) pour mélanger en continu la résine et le durcisseur en formant un mélange contenant la résine et le durcisseur dans des proportions prédéterminées; des moyens d'alimentation de filament (1a) pour fournir de façon continue une pluralité de filaments; des filières (2) pour recevoir de façon continue les quantités de mélange et pour imprégner en continu les filaments avec ce mélange et pour mettre en forme les filaments imprégnés et le mélange pour conformer une bande continue ayant un profil en coupe transversale correspondant au profil transversale de l'article fini; des moyens de conduite reliant lesdits moyens de mélange auxdites filières pour acheminer le mélange auxdites filières et pour maintenir le mélange hors de tout contact de l'atmosphère ambiante entre lesdits moyens de mélange et lesdites filières; et des moyens de traction (3, 4) situés en aval desdites filières pour tirer la bande de matière continue et mise en forme depuis les filières; caractérisé en ce que lesdites filières comportent une filière de formage (23) suivie par une filière de finition (24a), toutes les deux alignées axialement à l'intérieur d'un carter commun (2) et lesdites filières comportent une plaque de distribution (22) à l'extrémité axiale amont de la filière de formage, ladite plaque de distribution comportant une pluralité d'orifices dont au moins l'un d'entre eux (24a) est prévu pour l'introduction axiale du mélange dans ladite filière de formage et les autres ouvertures (21) permettent l'introduction de filaments dans ladite filière de formage selon une disposition autour de l'axe de la filière de formage, cette disposition ayant une configuration correspondant au profil en coupe du produit final.

7. Appareil de pultrusion selon la revendication 6, caractérisé en ce que lesdits moyens de conduite (15) comportent des moyens d'injection (16) coopérant avec l'un de ces orifices (24a) pour l'injection du mélange à l'intérieur de ladite filière de formage sans permettre le contact avec l'atmosphère ambiante.

8. Appareil de pultrusion selon la revendication 7, caractérisé en ce que ladite plaque de distribution (22) comporte ses orifices disposés de telle façon que les moyens d'injection (16) soient positionnés centralement sur la plaque et lesdits orifices restants (21) forment une disposition d'orifices autour des moyens d'injection.

9. Appareil de pultrusion selon l'une quelconque des revendications 6 à 8, caractérisé par des moyens de chauffage (26) pour préchauffer les filaments avant leur entrée dans ladite filière de formage.

10. Appareil de pultrusion selon l'une quelconque des revendications 6 à 9, caractérisé par des moyens de chauffage (27) pour préchauffer la résine avant son entrée dans lesdits moyens de mélange et des moyens de conduite (11) reliées à une source de résine (10) et auxdits moyens de mélange (12) pour acheminer la résine depuis les moyens de mélange sans permettre le contact de la résine avec l'air ambiant.

11. Filière pour la mise en oeuvre d'un procédé de pultrusion comportant des moyens d'admission de matière (22) permettant d'arranger le positionnement relatif des filaments et d'un mélange de résine entrant dans ladite filière, et un espace situé à l'intérieur de ladite filière dans lequel les filaments sont imprégnés du mélange de résine et dans lequel le composé résultant est mis en forme, caractérisée en ce que ladite filière comporte une filière de formage (23) suivie par une filière de finition (24a), toutes les deux alignées axialement dans un carter commun (2), ladite filière de finition comportant un tronçon de moule chauffé (25) pour la prise de la résine composite, et lesdits moyens d'admission comportent des moyens d'injection (16) pour injecter le mélange de résine selon une direction générale axiale à l'extrémité amont de ladite filière de formation et des moyens (21) pour guider les filaments dans la filière de formage selon une disposition autour de l'axe de la filière de formage, cette disposition ayant une configuration correspondant au profil en coupe de la forme délivrée depuis la filière de finition.

12. Filière selon la revendication 11, caractérisée en ce que les moyens d'admission de matière comportent une plaque d'extrémité amont 22 pour ladite filière de formage, les moyens de guidage des filaments sont constitués par une pluralité d'orifices (21) disposés selon ladite configuration dans ladite plaque d'extrémité et une ouverture centrale (24a) étant prévue dans ladite plaque pour recevoir un noyau de matière.

13. Filière selon la revendication 11, comportant en outre un noyau de moule (40) s'étendant axialement à travers ladite filière de formage et définissant à l'intérieur de cette dernière un espace annulaire dans lequel le composite de résine et de filament peut être extrudé pour former un produit composite à âme creuse.

**Patentansprüche**

1. Pultrusionsverfahren zur Herstellung von Gegenständen aus Verbundswerkstoff mit folgenden Schritten: Transport von Harz und Härtemittel durch getrennte Röhren mit einer jeweiligen Geschwindigkeit und unter kontinuierlichem Mischen, um eine Mischung aus Harz und Härtemittel in einem bestimmten Verhältnis herzustellen; kontinuierlicher Transport der Mischung ohne Kontakt mit der Umgebungsluft zu einer Preßform (23); kontinuierliches Hinzufügen einer Anzahl von verstärkenden Fasern in einen oberhalb gelegenen Bereich der Preßform; kontinuierliches Durchtränken der Fasern mit der Mischung in der Preßform; und kontinuierliches Formen der durchtränkten Fasern innerhalb einer Fertigungsform (24a) in eine Form, die die Querschnittsform des fertigen faserverstärkten Gegenstandes hat, während die Fasern der Länge nach durch die Formen gezogen werden; **dadurch gekennzeichnet,** daß das Material direkt aus der Preßform in die Fertigungsform innerhalb eines gemeinsamen Gehäuses (2) gelangt; die Fasern in den oberen Bereich der Preßform in einer Anordnung transportiert werden, die in ihrer Form im wesentlichen der Außenkontur im Querschnitt des zu formenden Endproduktes entspricht, und daß die Mischung kontinuierlich im wesentlichen axial in das obere Ende der Preßform eingeführt wird, damit die Faseranordnung um die Achse der Preßform in der Form erhalten bleibt, die der Form der Außenkontur im Querschnitt des Endproduktes entspricht.

2. Pultrusionsverfahren nach Anspruch 1, **dadurch gekennzeichnet,** daß das Harz und das Härtemittel kontinuierlich einem Mischgerät (12) zugeführt werden, und daß die Mischung kontinuierlich von dem Mischgerät zu dem oberen Ende der Preßform transportiert wird.

3. Pultrusionsverfahren nach Anspruch 1 oder 2, **dadurch gekennzeichnet,** daß einzelne Fäden jeweils in individuelle Öffnungen einer Gruppe von Öffnungen (21) in einer oberhalb gelegenen axialen Endplatte (22) der Preßform transportiert werden, wobei die Gruppe um die Achse der Preßform eine Anordnung von Öffnungen bildet, die im wesentlichen der Außenkontur des Querschnitts des herzustellenden Gegenstandes entspricht.

4. Pultrusionsverfahren nach einem der vorhergehenden Ansprüche, in dem die Harzmischung axial in die Preßform (23) im wesentlichen zentral in Bezug auf die Gruppe von Fäden, die in die Preßform eintreten, eingeführt wird.

5. Pultrusionsverfahren nach einem der vorhergehenden Ansprüche, **dadurch gekennzeichnet,** daß die Fasern im wesentlichen in axialer Richtung durch die Formen gezogen werden.

6. Pultrusionsvorrichtung zur Herstellung von länglichen Gegenständen aus Verbundwerkstoff mit einer Mischeinrichtung (12) zum kontinuierlichen Mischen von Harz und Härtemittel zur Herstellung einer Mischung aus Harz und Härtemittel in einem vorherbestimmten Verhältnis; einer Fadenversorgungseinrichtung (1a) zur Bereitstellung einer kontinuierlichen Versorgung mit einer Vielzahl von Fäden; einer Formeinrichtung (2) zum kontinuierlichen Empfangen einer Menge der Mischung und zum kontinuierlichen Durchtränken der Fäden mit einer solchen Mischung und zum Formen der durchgetränkten Fäden und der Mischung in einen kontinuierlichen Streifen mit einer Außenkontur im Querschnitt, die der Querschnittsform des fertiggestellten Gegenstands entspricht; einer Rohreinrichtung (15), welche die Mischeinrichtung mit der Formeinrichtung zum Transport der Mischung zu der Formeinrichtung und zum Fernhalten der Mischung von der sie umgebenden Atmosphäre zwischen der Mischvorrichtung und der Formvorrichtung verbindet; und einer Zugeinrichtung (3, 4) stromabwärts der Formeinrichtung, die das geformte kontinuierliche Streifenmaterial aus der Formeinrichtung herauszieht; **dadurch gekennzeichnet,** daß die Formeinrichtung eine Preßform (23), hat, der eine Fertigungseinrichtung (24a) folgt, die beide axial innerhalb eines gemeinsamen Gehäuses (12) ausgerichtet sind, wobei die Formeinrichtung eine Verteilerplatte (22) am oberen axialen Ende der Preßform beinhaltet, welche eine Anzahl von Öffnungen hat, von denen zumindest eine (24a) zum Einführen der Mischung im wesentlichen axial in die Preßform dient und die übrigen (21) zum Einführen der Fäden in die Preßform in einer Anordnung um die Achse der Preßform dienen, wobei die Form der Anordnung der Außenkontur im Querschnitt des Endproduktes entspricht.

7. Pultrusionsvorrichtung nach Anspruch 6, **dadurch gekennzeichnet,** daß die Rohreinrichtung (15) eine Injektionseinrichtung (16) enthält, die mit der einen Öffnung (24a) zusammenwirkt, um die Mischung in das Innere der Preßform einzuleiten, ohne daß die Mischung mit der umgebenden Atmosphäre in Berührung kommt.

8. Pultrusionsvorrichtung nach Anspruch 7, **dadurch gekennzeichnet,** daß auf der Verteilerplatte die Öffnungen (22) so angeordnet sind, daß die Injektionseinrichtung (16) im wesentlichen zentral darauf positioniert ist und die verbleibenden Öffnungen (21) eine Anordnung von Öffnungen um die Injektionseinrichtung bilden.

9. Pultrusionsvorrichtung nach einem der Ansprüche 6 bis 8, **dadurch gekennzeichnet,** daß eine Heizvorrichtung (26) zum Vorheizen der Fäden, bevor sie in die Formeinrichtung gelangen, vorhanden ist.

10. Pultrusionsvorrichtung nach einem der Ansprüche 6 bis 9, **dadurch gekennzeichnet,** daß eine Heizeinrichtung (27) zum Erhitzen des Harzes, bevor er in die Mischeinrichtung und die Rohreinrichtung (11) eintritt, vorhanden ist, die mit einer Harz-Versorgungsquelle (10) und der Mischeinrichtung (12) verbunden ist, um den Harz zu der Mischeinrichtung zu transportieren, ohne daß er mit der umgebenden Luft in Berührung kommt.

11. Formvorrichtung für ein Pultrusionsverfahren mit einer Materialeinführeinrichtung (22) zur relativen Positionierung der Fäden und einer Harzmischung, welche in die Vorrichtung eintritt, und Zwischenraum innerhalb der Formvorrichtung, in dem die Fäden mit der Harzmischung durchtränkt werden, und der daraus resultierende Verbundwerkstoff geformt wird, **dadurch gekennzeichnet,** daß die Formvorrichtung eine Preßform (23) enthält, der eine Fertigungsform (24a) folgt, wobei beide axial innerhalb eines gemeinsamen Gehäuses (2) angeordnet sind und wobei die Fertigungsform einen beheizten Muldenbereich (25) hat, um das Verbundmaterial zu härten, und wobei die Einführeinrichtung eine Injektionseinrichtung (16) zum Einführen der Harzmischung im wesentlichen axial in das obere Ende der Preßform und Mittel (21) zum Führen der Fäden in einer Anordnung um die Achse der Preßform aufweist, wobei die Form der Anordnung im Querschnitt der Außenkontur der von der Fertigungsform gelieferten Form entspricht.

12. Formvorrichtung nach Anspruch 11, **dadurch gekennzeichnet,** daß die Materialeinführeinrichtung eine obere Endplatte (22) für die Preßform hat, wobei die Fadenführeinrichtung aus einer Anzahl von Öffnungen (21) besteht, die auf der Endplatte in der besagten Anordnung angeordnet sind; und daß eine zentrale Öffnung (24a) auf der Endplatte liegt, um einen Materialkern aufzunehmen.

13. Formvorrichtung nach Anspruch 11, weiterhin mit einem Kernformteil (40), das sich axial durch die Preßform erstreckt und damit einen ringförmigen Zwischenraum festlegt, durch den die Harzfadenverbund herausgezogen werden kann, um so ein Harz-Faden-Verbundmaterialprodukt zu bilden.

FIG. 1

FIG. 3

FIG. 4

FIG. 5

FIG. 2

mixer/injector 12
Gripper-Pullers 3,4
Heated (die) 25
Heater (Roving) 26
Heater (Resin) 27
Saw 5

Fig. 6

Fig. 7

Fig. 8

Fig. 9